# EUROPÄISCHE PATENTSCHRIFT

(11) **EP 0 565 752 B1**
(45) Veröffentlichungstag und Bekanntmachung des Hinweises auf die Patenterteilung: **01.07.1998**
(21) Anmeldenummer: 92106427.5
(22) Anmeldetag: 14.04.1992
(51) Int. Cl.: B32B 7/12, B29C 63/00, B32B 31/00

(54) **Verfahren zum Beschichten von flächigem Trägermaterial sowie Beschichtungsanlage zur Durchführung des Verfahrens**
Process for coating a flat substrate, and coating apparatus for carrying out the process
Procédé pour l'enduction d'un substrat plan et dispositif pour la mise en oeuvre du procédé

(43) Veröffentlichungstag der Anmeldung: 20.10.1993
(73) Patentinhaber: FRIZ MASCHINENBAU GmbH, D-74189 Weinsberg (DE)
(72) Erfinder: Miller, Rainer, W-7239 Fluorn-Winzeln (DE)
(74) Vertreter: Kohlmann, Karl Friedrich, Dipl.-Ing.

(56) Entgegenhaltungen:
- DE-A- 2 704 689
- FR-A- 2 318 736
- GB-A- 1 453 872
- US-A- 4 169 005
- US-A- 4 295 910

## Beschreibung

Die vorliegende Erfindung betrifft ein Verfahren zum Beschichten von flächigem Trägermaterial mit Beschichtungsmaterial im Durchlauf, mit folgenden Schritten:
- Entstauben und Abbürsten des Trägermaterials,
- Erwärmen des Trägermaterials,
- Auftragen einer Schicht von Klebstoff auf das erwärmte Trägermaterial,
- Abdunsten der Klebstoffschicht,
- Zuführen des Beschichtungsmaterials zu der mit der Klebstoffschicht versehenen Oberfläche des Trägermaterials und Zusammenpressen der beiden Materiallagen.

Die vorliegende Erfindung betrifft ferner eine Beschichtungsanlage zur Durchführung dieses Verfahrens, die ausgestattet ist,
- mit einer Entstaubungs- und Abbürsteinheit für das Trägermaterial,
- einer Erwärmungsstrecke für das Trägermaterial,
- einer Einheit zum Auftragen des Klebstoffes auf das Trägermaterial,
- einer Abdunststrecke, und
- einer Preßeinrichtung, in der das Beschichtungsmaterial mit dem Trägermaterial zusammengeführt wird und beide Materialien miteinander verpreßt werden.

Unter dem Begriff "Trägermaterial" werden plattenförmige Werkstücke aus Holz, Holzwerkstoffen oder anderen feuchtigkeitsabsorbierenden Werkstoffen verstanden.

Unter dem Begriff "Klebstoffe" wird Dispersionskleber auf PVaC-Basis oder PVaC-Mischpolymerisat-Basis verstanden.

Unter dem Begriff "Beschichtungsmaterial" wird allgemein Bandrollenware und Blattware aus Holz, Kunststoff, Metall oder mit Schichtstoffaufbau auf Papier-Harz-Basis oder dergleichen verstanden.

Bei bekannten Verfahrensweisen der eingangs genannten Art erfolgt das Abdunsten der Klebstoffschicht nach dem Auftragen auf das Trägermaterial durch Wärmezufuhr von außen, wie beispielsweise mittels einer über der Abdunststrecke angeordneten Heizeinrichtung.

Im Anschluß daran wird das Umgebungstemperatur aufweisende Beschichtungsmaterial der mit der abgedunsteten Klebstoffschicht versehenen Oberfläche des Trägermaterials zugeführt und das Beschichtungsmaterial mit dem Trägermaterial über eine beheizte Preßeinrichtung, wie beispielsweise ein beheiztes Walzenpaar verpreßt.

Verfahrensweisen dieser bekannten Art werden häufig mittels sogenannter Durchlauf-Bandpressen realisiert. Gegenüber sogenannten Kurztaktpreßanordnungen ermöglichen Durchlauf-Bandpressen eine erhebliche Erhöhung der Leistung. Durchlauf-Bandpressen der herkömmlichen Art haben allerdings gegenüber Kurztaktpreßanlagen den Nachteil, daß sie eine wesentlich höhere Investition darstellen. Von Nachteil ist ferner, daß die Vorwärmzeiten derartiger Durchlauf-Bandpressen relativ lang sind, ein relativ hoher Energieeinsatz erforderlich ist sowie hohe Wartungskosten einkalkuliert werden müssen.

Aus der FR-A-2 318 736 ist eine Beschichtungsanlage bekannt, in der in einer Heizvorrichtung ein mit Leim zu versehendes Werkstück erwärmt wird. Dann wird auf das erwärmte Werkstück in einer Beleimvorrichtung Leim aufgegeben. Daraufhin wird das mit Leim versehene Werkstück auf einer Strecke in einem Luftzuführungskanal durch Zuführung erwärmter Luft erwärmt. Das Beschichtungsmaterial wird in einer weiteren Beleimvorrichtung mit Leim versehen und ebenfalls in dem Luftzuführungskanal durch Zuführung erwärmter Luft erwärmt. Die mit Leim versehenen und nunmehr erwärmten Gegenstände werden durch Andruckrollen aufeinandergepreßt und miteinander verbunden. Bei den Andruckrollen handelt es sich um nebeneinander liegende Rollen. Auch bei dieser bekannten Beschichtungsanlage erfolgt ein Abdunsten der Klebstoffschicht in einer Abdunststrecke, auf der eine Zuführung erwärmter Luft erfolgt. Dementsprechend sind auch hier höhere Investitionskosten und ein höherer Energieeinsatz erforderlich.

Das der Erfindung zugrunde liegende technische Problem besteht darin, ein Verfahren der eingangs geschilderten Art sowie eine Beschichtungsanlage zur Durchführung eines derartigen Verfahrens derart weiter zu bilden, daß bei niedrigen Investitionskosten und geringerem Energieeinsatz ein möglichst gutes Verklebungsergebnis erzielt wird.

Diese Aufgabe wird erfindungsgemäß durch ein Verfahren gelöst, bei dem ausgehend von der eingangs beschriebenen bekannten Verfahrensweise
- die Oberfläche des Trägermaterials beschichtungsseitig vor dem Kleberauftrag bis in eine geringe Tiefe auf mindestens 60°C erwärmt wird,
- der Abdunstvorgang ausschließlich durch Wärmeenergie aus der erwärmten Oberfläche des Trägermaterials gespeist wird, und
- die Oberfläche des Beschichtungsmaterials unmittelbar vor dem Preßvorgang zumindest trägermaterialseitig auf mindestens 80°C erwärmt wird.

Eine bevorzugte Beschichtungsanlage mit den eingangs genannten Merkmalen zur Durchführung dieses Verfahrens ist erfindungsgemäß zur Lösung der gestellten Aufgabe in der Weise weitergebildet,
- daß die Erwärmungsstrecke mit einer das Trägermaterial auf eine Temperatur von mindestens 60° erwärmenden Heizeinrichtung ausgestattet ist,
- daß die Abdunststrecke keine Heizeinrichtung aufweist,
- daß eine Aufheizstrecke für das Beschichtungsmaterial vorgesehen ist, welche eine das Beschichtungsmaterial auf mindestens 80°C erwärmende Heizeinrichtung aufweist, und
- daß die Preßeinrichtung mit einem unbeheizten Walzenpaar ausgestattet ist.

Durch die erfindungsgemäßen Merkmale ist erstmalig eine Verfahrensweise und eine Beschichtungsanlage zur Durchführung eines derartigen Verfahren geschaffen, mit der im Durchlauf Verklebungsergebnisse erzielt werden, die denen mit sogenannten Kurztaktpressen erzielbaren Verklebungsergebnissen entsprechen. Diese für Durchlaufverfahren überraschend guten Verklebungsergebnisse sind darauf zurückzuführen, daß durch die Zufuhr von Wärmeenergie in die Klebstoffschicht in der erfindungsgemäßen Weise aus dem Trägermaterial heraus eine Hautbildung auf der freien Oberfläche der Klebstoffschicht vermieden und dadurch der für den Auftragvorgang der Klebstoffschicht im Klebstoff notwendige Wasseranteil von 40% bis 50% vor dem Zusammenführen mit dem Beschichtungsmaterial bis auf eine vorgegebene Restfeuchte schnell und ungehindert abdunsten kann.

Der geringe Energieeinsatz wiederum resultiert aus den Maßnahmen, daß die für die Aktivierung der Klebstoffschicht notwendige Energie ausschließlich in denjenigen Bereichen aufgebracht wird, in denen die Wärme für die Aktivierung erforderlich ist. Somit wird das Trägermaterial nur in demjenigen Oberflächenbereich erwärmt, auf den die Klebstoffschicht im darauffolgenden Schritt aufgebracht wird. Die beim Zusammenfügen von Trägermaterial und Beschichtungsmaterial notwendige Wärmemenge wiederum wird nicht über die Walzen der Preßanordnung, sondern direkt in den der Klebstoffschicht zugewandten Oberflächenbereich des Beschichtungsmaterials eingeleitet. Auf diese Weise wird die erforderliche Wärmemenge direkt und ausschließlich in den Bereich der Leimfuge zwischen die beiden Materiallagen eingespeist. Das sich negativ auf die Energiebilanz auswirkende Aufheizen von Walzen, Preßplatten oder Preßbändern kann somit unterbleiben.

Aufgrund der optimalen Anfangshaftung sind zudem in aller Regel keine sogenannten Nachpreßwalzen erforderlich, so daß sich wiederum der maschinelle Aufwand reduziert.

Grundsätzlich muß der Temperaturwert für das Aufheizen der Oberfläche des Trägermaterials den jeweiligen Bedingungen und Materialien, insbesondere dem jeweils verwendeten Klebstoff angepaßt werden. Wird beispielsweise Dispersionsklebstoff auf PVaC- oder PUR-Basis eingesetzt, ist es vorteilhaft, die Oberfläche des Trägermaterials auf einen Temperaturwert zwischen 60° und 80°C zu erwärmen.

In der gleichen Weise muß der Temperaturwert für das Aufheizen des Beschichtungsmaterials den Gegebenheiten entsprechend gewählt werden. Für Beschichtungsmaterial aus Furnieren, Dekopapieren und dergleichen ist es vorteilhaft, den Temperaturwert zwischen 80° und 120°C zu wählen. Für Beschichtungsmaterial aus Schichtstoffen auf Melaminharzbasis bzw. Polyesterbasis ist es vorteilhaft, einen Temperaturwert zwischen 120° und 140°C zu wählen.

Im Bereich der Erwärmungsstrecke für das Trägermaterial können die verschiedensten Heizeinrichtungen angeordnet werden. Für einen Temperaturwert zwischen 60° und 70°C eignen sich als Heizeinrichtungen in besonderer Weise langwellige IR-Strahler. Diese langwelligen IR-Strahler eignen sich auch in besonderer Weise für das Erwärmen des Beschichtungsmaterials.

Je nach der Stärke des Beschichtungsmaterials bemessen sich zweckmäßigerweise auch die Heizeinrichtungen. So kann beispielsweise dünnes Beschichtungsmaterial über seine gesamte Materialstärke, auf den jeweiligen Temperaturwert erwärmt werden. Bei dickeren Beschichtungsmaterialien kann es zweckmäßig sein, das Material lediglich auf der dem Trägermaterial zugewandten Seite bis in eine geringe Tiefe zu erwärmen.

Im folgenden ist zur weiteren Erläuterung und zum besseren Verständnis das erfindungsgemäße Verfahren im Zusammenhang mit einer Beschichtungsanlage zur Durchführung des Verfahrens näher beschrieben und erläutert.

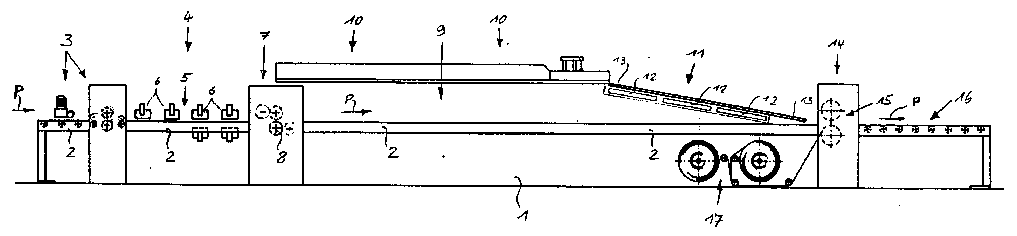

Die Zeichnung zeigt schematisch ein bevorzugtes Ausführungsbeispiel einer Beschichtungsanlage zur Durchführung des erfindungsgemäßen Verfahrens. Diese Beschichtungsanlage besteht aus einem Maschinengestell 1, welches mit einer über die gesamte Länge durchlaufenden Fördereinrichtung 2 für das Trägermaterial ausgestattet ist. Diese Fördereinrichtung 2 kann beispielsweise als Rollen- oder Kettenförderer ausgebildet sein, der das Trägermaterial in Richtung des Pfeiles P durch die Beschichtungsanlage fördert.

Einlaufseitig ist an der Fördereinrichtung 2 als erste Station eine Entstaubungs- und Abbürsteinheit 3 für das Trägermaterial vorgesehen. An diese Entstaubungs- und Abbürsteinheit 3 schließt sich eine Erwärmungsstrecke 4 für das Trägermaterial an, welche mit einer Heizeinrichtung 5 ausgestattet ist, die im vorliegenden Ausführungsbeispiel aus vier langwelligen IR-Strahlern 6 besteht.

Die Heizeinrichtung 5 ist dabei derart bemessen, daß das Trägermaterial am Ende der Erwärmungsstrecke beschichtungsseitig bis in eine geringe Tiefe auf mindestens 60°C erwärmt werden kann.

An die Erwärmungsstrecke 4 schließt eine Einheit 7 zum Auftragen von Klebstoff auf das Trägermaterial an, die im vorliegenden Ausführungsbeispiel ein Auftragswalzenpaar 8 für den Klebstoff aufweist. Die übrigen Teile der Einheit 7 zum Auftragen von Klebstoff sind der Übersichtlichkeit halber in der beigefügten Figur nicht dargestellt.

An die Einheit 7 zum Auftragen von Klebstoff schließt sich eine relativ lange Abdunststrecke 9 an. In dieser Abdunststrecke 9 läuft der sogenannte Abdunstvorgang ab, bei dem der für den Auftragvorgang in der Einheit 7 notwendige Wasserbestandteil im Klebstoff vor dem Zusammenführen mit dem Beschichtungsmaterial abdunsten kann. Erfindungsgemäß wird der Abdunstvorgang ausschließlich durch die in der Erwärmungsstrecke 4 in die beschichtungsseitige Oberfläche des Trägermaterials eingeführte Wärme gespeist.

Über der Abdunststrecke 9 ist eine Zufuhreinrichtung 10 für das Beschichtungsmaterial vorgesehen. Über die Zufuhreinrichtung kann Beschichtungsmaterial in Form von Streifen- oder Rollenware verarbeitet werden.

Die Zufuhreinrichtung 10 ist mit einer Aufheizstrecke 11 augestattet, die eine Heizeinrichtung 12 aufweist, über welche zumindest die dem Trägermaterial zugewandte Oberfläche des Beschichtungsmaterials auf mindestens 80°C erwärmt wird. Die Heizeinrichtung 12 kann ebenfalls aus langwelligen IR-Strahlern bestehen.

Die Zufuhreinrichtung 10 für das Beschichtungsmaterial besitzt im Bereich der Heizeinrichtung 12 eine Führung 13, über welche das Beschichtungsmaterial in eine genau vorgegebene Lage gegenüber dem geförderten Trägermaterial gebracht und mit dem Trägermaterial zusammengeführt wird. Diese Zusammenführung erfolgt im vorliegenden Ausführungsbeispiel durch eine sich an die Aufheizstrecke 11 anschließende Preßeinrichtung 14, welche im vorliegenden Fall aus einem unbeheizten Walzenpaar 15 besteht. In der Preßeinrichtung 14 werden das Trägermaterial und das Beschichtungsmaterial miteinander verpreßt und auf einen Rollengang 16 ausgeschoben, von dem aus dann das fertigbeschichtete Trägermaterial der weiteren Bearbeitung zugeführt wird.

In dem Maschinengestell 1 ist in dem Bereich unterhalb der Aufheizstation 11 eine Speicheranordnung 17 für sogenanntes Gegenzugpapier angeordnet. Dieses Gegenzugpapier wird in der Preßeinrichtung auf das Trägermaterial auf der dem Beschichtungsmaterial entgegengesetzten Seite aufgebracht. Dadurch wird verhindert, daß sich das Trägermaterial beim Aufbringen des Beschichtungsmaterial aufgrund der Spannungsverhältnisse verzieht.

## Patentansprüche

1. Verfahren zum Beschichten von flächigem Trägermaterial mit Beschichtungsmaterial im Durchlauf, mit folgenden Schritten:
- Entstauben und Abbürsten des Trägermaterials,
- Erwärmen des Trägermaterials,
- Auftragen einer Schicht von Klebstoff auf das erwärmte Trägermaterial,
- Abdunsten der Klebstoffschicht,
- Zuführen des Beschichtungsmaterials zu der mit der Klebstoffschicht versehenen Oberfläche des Trägermaterials und Zusammenpressen der beiden Materiallagen,
dadurch **gekennzeichnet,**
- daß die Oberfläche des Trägermaterials beschichtungsseitig vor dem Kleberauftrag bis in eine geringe Tiefe auf mindestens 60°C erwärmt wird,
- daß der Abdunstvorgang nach dem Auftragen der Klebstoffschicht ausschließlich durch Wärmeenergie aus der erwärmten Oberfläche des Trägermaterials gespeist wird,
- daß die Oberfläche des Beschichtungsmaterials unmittelbar vor dem Preßvorgang zumindest trägermaterialseitig auf mindestens 80°C erwärmt wird.

2. Verfahren nach Anspruch 1,
dadurch **gekennzeichnet,** daß
die Oberfläche des Trägermaterials auf einen Temperaturwert zwischen 60° und 70°C erwärmt wird.

3. Verfahren nach Anspruch 1,
dadurch **gekennzeichnet,** daß
die Oberfläche des Beschichtungsmaterials auf einen Temperaturwert zwischen 90° und 120°C erwärmt wird.

4. Verfahren nach Anspruch 1,
dadurch **gekennzeichnet,** daß
die Oberfläche des Beschichtungsmaterials auf einen Temperaturwert zwischen 120° und 140°C erwärmt wird.

5. Beschichtungsanlage zur Durchführung des Verfahrens nach Anspruch 1 bis 4,
- mit einer Entstaubungs- und Abbürsteinheit (3) für das Trägermaterial,
- einer Erwärmungsstrecke (4) für das Trägermaterial, die mit einer das Trägermaterial auf eine Temperatur von mindestens 60° erwärmenden Heizeinrichtung (5) ausgestattet ist,
- einer Einheit (7) zum Auftragen des Klebstoffes auf das Trägermaterial,
- einer Abdunststrecke (9), die keine Heizeinrichtung aufweist,
- einer Preßeinrichtung (14) mit einem unbeheizten Walzenpaar (15) in der das Beschichtungsmaterial mit dem Trägermaterial zusammengeführt wird und beide Materialien miteinander verpreßt werden, und
- einer Aufheizstrecke (11) für das Beschichtungsmaterial, welche eine das Beschichtungsmaterial auf mindestens 80° erwärmende Heizeinrichtung (12) aufweist.

6. Beschichtungsanlage nach Anspruch 5,
dadurch **gekennzeichnet,** daß
die Erwärmungsstrecke (4) mit einer die Oberfläche des Trägermaterials auf einen Temperaturwert zwischen 60° und 70°C erwärmenden Heizeinrichtung (5) ausgestattet ist.

7. Beschichtungsanlage nach Anspruch 5,
dadurch **gekennzeichnet,** daß
die Aufheizstrecke (11) mit einer die Oberfläche des Beschichtungsmaterials auf einen Temperaturwert zwischen 90° und 120°C erwärmenden Heizeinrichtung (12) ausgestattet ist.

8. Beschichtungsanlage nach Anspruch 5,
dadurch **gekennzeichnet,** daß
die Aufheizstrecke (11) mit einer die Oberfläche des Beschichtungsmaterials auf einen Temperaturwert zwischen 120° und 140°C erwärmenden Heizeinrichtung (12) ausgestattet ist.

## Claims

1. Process for the coating of flat support material with coating material in a continuous run having the following steps:
- dedusting and brushing off the support material;
- heating up the support material;
- application of a layer of adhesive on to the heated support material;
- flashing off the layer of adhesive;
- feeding the coating material to the surface of the support material provided with the layer of adhesive and pressing the two layers of material together;
characterised in
- that the surface of the support material is heated to at least 60 °C to a small depth on the side to be coated before the application of adhesive,
- that the flash-off process after the application of the adhesive layer is powered exclusively by thermal energy from the heated surface of the support material,
- that the surface of the coating material is heated to at least 80 °C at least on the side facing the support material immediately before the pressing process.

2. Process according to Claim 1
characterised in that
the surface of the support material is heated to a temperature between 60 ° and 70 °C.

3. Process according to Claim 1,
characterised in that
the surface of the coating material is heated to a temperature between 90 ° and 120 °C.

4. Process according to Claim 1,
characterised in that
the surface of the coating material is heated to a temperature between 120 ° and 140 °C.

5. Coating installation for carrying out the process according to Claims 1 to 4,
- having a dedusting and brushing unit (3) for the support material,
- a heating zone (4) for the support material which is equipped with a heating device (5) heating the support material to a temperature of at least 60 °C,
- a unit (7) for applying the adhesive to the support material,
- a flash-off zone (9) which does not have a heating device,
- a pressing device (14) with a pair of unheated rollers (15) in which the coating material is led in together with the support material and both materials are compressed with one another, and
- a heating zone (11) for the coating material which has a heating device (12) heating the coating material to at least 80 °C.

6. Coating installation according to Claim 5,
characterised in that
the heating zone (4) is equipped with a heating device (5) heating the surface of the support material to a temperature between 60 ° and 70 °C.

7. Coating installation according to Claim 5,
characterised in that
the heating zone (11) is equipped with a heating device (12) heating the surface of the coating material to a temperature between 90 ° and 120 °C.

8. Coating installation according to Claim 5,
characterised in that
the heating zone (11) is equipped with a heating device (12) heating the surface of the coating material to a temperature between 120 ° and 140 °C.

## Revendications

1. Procédé de revêtement en continu d'un matériau de support plat par un matériau de revêtement, comportant les étapes suivantes :
- dépoussiérage et brossage du matériau de support,
- chauffage du matériau de support,
- application d'une couche de colle sur le matériau de support chauffé,
- évaporation de la couche de colle,
- amenée du matériau de revêtement sur la surface, dotée de la couche de colle, du matériau de support et pressage des deux couches de matériau,
caractérisé
- en ce que, avant l'application de la colle, la surface du matériau de support est chauffée à au moins 60°C sur une faible profondeur, du côté du revêtement,
- en ce que l'opération d'évaporation qui suit l'application de la couche de colle est réalisée uniquement par l'énergie thermique emmagasinée dans la surface chauffée du matériau de support, et
- en que, avant l'opération de pressage, la surface du matériau de revêtement est chauffée à au moins 80°C, au moins du côté du matériau de support.

2. Procédé selon la revendication 1, caractérisé en ce que la surface du matériau de support est chauffée à une température dont la valeur est comprise entre 60 et 70°C.

3. Procédé selon la revendication 1, caractérisé en ce que la surface du matériau de revêtement est chauffée à une température dont la valeur est comprise entre 90 et 120°C.

4. Procédé selon la revendication 1, caractérisé en ce que la surface du matériau de revêtement est chauffée à une température dont la valeur est comprise 120 et 140°C.

5. Installation de revêtement en vue de l'exécution du procédé selon les revendications 1 à 4, comportant :
- une unité (3) de dépoussiérage et de brossage du matériau de support,
- une section de chauffage (4) du matériau de support, qui est équipée d'un dispositif de chauffage (5) chauffant le matériau de support à une température d'au moins 60°C,
- une unité (7) pour appliquer la colle sur le matériau de support,
- une section d'évaporation (9) qui ne présente pas de dispositif de chauffage,
- un dispositif de pressage (14) comportant une paire de cylindres (15) non chauffés, dans lequel le matériau de revêtement est amené en même temps que le matériau de support et dans lequel les deux matériaux sont pressés l'un contre l'autre, et
- une section de réchauffage (11) du matériau de revêtement, qui présente un dispositif de chauffage (12) chauffant le matériau de revêtement à au moins 80°C.

6. Installation de revêtement selon la revendication 5, caractérisée en ce que la section de chauffage (4) est équipée d'un dispositif de chauffage (5) chauffant la surface du matériau de support à une température dont la valeur est comprise entre 60 et 70°C.

7. Installation de revêtement selon la revendication 5, caractérisée que la section de réchauffage (11) est équipée d'un dispositif de chauffage (12) chauffant la surface du matériau de revêtement à une température dont la valeur est comprise entre 90 et 120°C.

8. Installation de revêtement selon la revendication 5, caractérisée en ce que la section de réchauffage (11) est équipée d'un dispositif de chauffage (12) chauffant la surface du matériau de revêtement à une température dont la valeur est comprise entre 120 et 140°C.
